# EUROPEAN PATENT SPECIFICATION

(11) **EP 3 754 177 B1**
(45) Date of publication and mention of the grant of the patent: **20.12.2023**
(21) Application number: 19750787.4
(22) Date of filing: 11.02.2019
(51) Int. Cl.: F03B 13/18, F03B 15/00, F16H 49/00, F16H 19/04

(54) **WAVE FORCE GENERATION SYSTEM AND CONTROLLING METHOD THEREFOR**
WELLENKRAFTERZEUGUNGSSYSTEM UND STEUERVERFAHREN DAFÜR
SYSTÈME DE PRODUCTION D'ÉNERGIE A PARTIR DE LA FORCE DES VAGUES ET SON PROCÉDÉ DE COMMANDE

(30) Priority: 12.02.2018 KR 20180017304
(43) Date of publication of application: 23.12.2020
(73) Proprietor: Ingine, Inc., Seoul 02633 (KR); INGINE WAVE ENERGY SYSTEMS LTD., Forss, Thurso, Scotland KW14 7UZ (GB)
(72) Inventor: SUNG, Yong Jun, Seoul 02030 (KR); KIM, Jong Yun, Seoul 01337 (KR)
(74) Representative: V.O.
(86) International application number: PCT/KR2019/001613
(87) International publication number: WO 2019/156516

(56) References cited:
- EP-A2- 2 284 386
- CN-A- 103 758 685
- CN-A- 106 050 540
- JP-A- H05 306 674
- JP-U- S6 158 685
- KR-A- 20100 123 028
- KR-A- 20130 074 001
- KR-A- 20160 034 160
- KR-A- 20170 084 891

## Description

### TECHNICAL FIELD

The following description relates to a wave force generation system and a method of controlling the wave force generation system.

### BACKGROUND ART

Generally, power generation methods of generating electricity include, for example, hydroelectric power generation, thermal power generation, nuclear power generation, and the like, and such power generation methods require large-scale power generation facilities. In addition, in the case of thermal power generation, since a huge amount of petroleum or coal energy needs to be supplied in order to operate power generation facilities, many difficulties are predicted at the present time when petroleum and coal resources are depleted, and pollution also becomes a big issue. Also, in the case of nuclear power generation, a radiation leakage and nuclear waste disposal are serious. Since a fall head of water is used in the hydroelectric power generation, a large-scale dam needs to be constructed, which leads to a change in surrounding environments. Also, the hydroelectric power generation has environmental constraints that a river with abundant water resources needs to be assumed for a dam construction. Thus, there is a demand for groundbreaking power generation methods that are cheaper, safer, and more environmentally friendly than the above general power generation methods, and one of them is wave power generation capable of producing electric energy using movement of waves.

Attention has been focused on tidal power generation for producing electric energy using a tidal range, tidal stream power generation for producing electric energy using a high flow rate of seawater, and wave power generation for producing electric energy using movement of waves. In particular, the wave power generation is a technology of producing electric energy based on constant movement of waves, and may continue to produce energy. The wave power generation converts a back-and-forth motion of water particles and a periodic vertical motion of the sea level due to waves into a mechanical rotational motion or an axial motion through an energy conversion device, and then into electrical energy. Wave power generation methods may be classified into a variety of kinds according to a primary energy conversion method based on a wave height, and a representative method is a movable object type method of operating an electric generator in response to a vertical motion or a rotational motion of a buoy floating on a water surface by movement of waves.

The movable obj ect type method is a method of receiving movement of an object, for example, a buoy, that moves based on movement of waves, converting the movement into a reciprocating or rotational motion, and generating electric power using an electric generator, and an example thereof is disclosed in Korean Patent Application Publication No. 10-2015-00120896 or Japanese Patent Registration No. 5260092.

However, irregular kinetic energy is provided due to characteristics of waves. Therefore, to stably produce energy, there is a demand for a system and a control method for producing effective electric energy in a motion transmission portion that transmits wave energy, and a power conversion portion that converts received kinetic energy into rotational kinetic energy used for power generation.

CN103758685 provides a wave power generator comprising an undersea caisson fixed underseas, a middle float connected with the undersea caisson through tension ropes, at least one hydraulic cylinder, and a vibrating floater. A generating unit is mounted in the middle float and connected with a suction-drain port of every hydraulic cylinder.

The above description has been possessed or acquired by the inventor(s) in the course of conceiving the present invention and is not necessarily an art publicly known before the present application is filed.

### DISCLOSURE OF INVENTION

### Technical Goals

Example embodiments provide a control system and method of a wave force generation facility that may enhance an energy conversion efficiency and that may have a high degree of control freedom.

Problems to be solved in the example embodiments are not limited to the aforementioned problems, and other problems not mentioned herein can be clearly understood by those skilled in the art from the following description.

### Technical Solutions

The present invention is defined by the features of claim 1.

According to example embodiments to solve the foregoing problems, a wave force generation system includes a power conversion portion that includes a hydraulic cylinder configured to generate a hydraulic pressure by a six degrees-of-freedom motion of a movable object floating on waves, wherein when a force is applied to the hydraulic cylinder in one direction thereof, the power conversion portion allows a fluid to flow along a first path, to produce electric energy, and wherein when a force is applied to the hydraulic cylinder in another direction thereof, the power conversion portion allows the fluid to flow through a second path that allows the fluid to bypass and flow in a direction opposite to the first path, and the second path is merged with the first path, to produce electric energy.

A plurality of tensile force transmission members connected to at least three portions of the movable object are included. Each of the tensile force transmission members includes a first driving portion configured to drive the hydraulic cylinder, and a restoring force transmission portion. When a tensile force is applied, each of the tensile force transmission members may apply a force to the hydraulic cylinder in the one direction. When the tensile force is released in each of the tensile force transmission members, the restoring force transmission portion may apply a force to the hydraulic cylinder in the other direction. The first driving portion converts movement of each of the tensile force transmission members into a reciprocating rectilinear motion and transmits a force to the hydraulic cylinder. For example, the first driving portion may include a rack gear and a pinion gear.

According to an aspect, the restoring force transmission portion may include a second driving portion connected to each of the tensile force transmission members so that the first driving portion is driven in a direction opposite to each of the tensile force transmission members, and an elastic portion driven by the second driving portion. The elastic portion may include at least one of a gas spring, a hydraulic spring, and a pneumatic spring. The second driving portion may include a rack gear and a pinion gear.

According to an aspect, the first driving portion and the restoring force transmission portion may be included in each of the tensile force transmission members.

According to example embodiments to solve the foregoing problems, a wave force generation system includes a movable object that moves by waves while floating on the waves, a motion transmission portion including a tensile force transmission member connected to enable a six degrees-of-freedom motion of the movable object and configured to transmit kinetic energy of the movable object, a power conversion portion including a first driving portion connected to the tensile force transmission member, a hydraulic cylinder configured to generate a hydraulic pressure by the first driving portion, a hydraulic motor driven by the hydraulic pressure generated by the hydraulic cylinder, and a hydraulic circuit that is configured to connect the hydraulic cylinder and the hydraulic motor and in which a fluid flows, and a restoring force transmission portion connected to the tensile force transmission member and configured to generate a hydraulic pressure in the hydraulic cylinder in a direction opposite to the tensile force transmission member through the first driving portion.

According to an aspect, when a tensile force is applied to the tensile force transmission member, the first driving portion may apply a force to the hydraulic cylinder in one direction. When the tensile force is released in the tensile force transmission member, the first driving portion may apply a force to the hydraulic cylinder in another direction by a force applied by the restoring force transmission portion. For example, the first driving portion may include a rack gear and a pinion gear.

According to an aspect, the restoring force transmission portion may include a second driving portion and an elastic portion, to apply a force to the first driving portion in a direction opposite to the tensile force transmission member. For example, the elastic portion may include at least one of a gas spring, a hydraulic spring, and a pneumatic spring. The second driving portion may include a rack gear and a pinion gear.

According to an aspect, the hydraulic circuit may include a first path along which the fluid flows to drive the hydraulic motor when a force is applied to the hydraulic cylinder in one direction, and a second path configured to allow the fluid to flow between one end and another end of the hydraulic cylinder when a force is applied to the hydraulic cylinder in another direction. The second path may be formed to allow a fluid flowing out from the hydraulic cylinder in the other direction to flow into the first path, so that electric energy is produced by the hydraulic motor through the first path. Also, the second path may be configured to circulate the fluid between the one end and the other end of the hydraulic cylinder by preventing the fluid from flowing into the first path.

According to example embodiments to solve the foregoing problems, a method of controlling a wave force generation system includes transmitting six degrees-of-freedom kinetic energy of a movable object that moves by waves while floating on the waves to a power conversion portion through a tensile force transmission member, generating a hydraulic pressure in one direction when a tensile force is applied to the tensile force transmission member and generating a hydraulic pressure in another direction when the tensile force is released in the tensile force transmission member, in the power conversion portion, and producing electric energy by each of the hydraulic pressure generated in the one direction and the hydraulic pressure generated in the other direction.

According to an aspect, in the generating of the hydraulic pressures, the tensile force transmission member may include a first driving portion configured to drive a hydraulic cylinder, and a restoring force transmission portion configured to apply a force to the first driving portion in a direction opposite to the tensile force transmission member when the tensile force is released in the tensile force transmission member. When a force is applied to the hydraulic cylinder in the one direction, a fluid may flow along a first path. When a force is applied to the hydraulic cylinder in the other direction by the restoring force transmission portion, a fluid may be bypassed between one end and another end of the hydraulic cylinder and may flow along a second path.

### EFFECTS

As described above, according to example embodiments, it is possible to enhance a power generation efficiency based on movement of a movable object using a hydraulic circuit.

Also, it is possible to prevent abnormality from occurring in a wave force generation system due to a disturbance by bypassing an electric generator, instead of operating the electric generator, when a disturbance such as sudden movement occurs.

The effects of the wave force generation system and a method of controlling the wave force generation system are not limited to the aforementioned effects, and other unmentioned effects can be clearly understood by those skilled in the art from the following description.

### BRIEF DESCRIPTION OF DRAWINGS

The accompanying drawings illustrate example embodiments of the present invention and, together with the detailed description of the invention, serve to provide further understanding of the technical idea of the present invention. However, the present invention is not to be construed as being limited to the drawings.
FIG. 1 is a diagram illustrating a concept of a wave force generation system according to an example embodiment.
FIG. 2 is a diagram illustrating a concept of a configuration of a power conversion portion in a wave force generation system according to an example embodiment.
FIGS. 3 and 4 are diagrams illustrating an operation of the power conversion portion of FIG. 2.

### BEST MODE FOR CARRYING OUT THE INVENTION

Hereinafter, example embodiments will be described in detail with reference to the illustrative drawings. In denoting reference numerals to constituent elements of the respective drawings, it should be noted that the same constituent elements will be designated by the same reference numerals, if possible, even though the constituent elements are illustrated in different drawings. Further, in the following description of the example embodiments, a detailed description of publicly known configurations or functions incorporated herein will be omitted when it is determined that the detailed description obscures the subject matters of the example embodiments.

In addition, the terms first, second, A, B, (a), and (b) may be used to describe components of the example embodiments. These terms are used only for the purpose of discriminating one component from another component, and the nature, the sequences, or the orders of the components are not limited by the terms. When one component is described as being "connected", "coupled", or "joined" to another component, it should be understood that one component can be connected or attached directly to another component, and an intervening component can also be "connected", "coupled", or "joined" to the components.

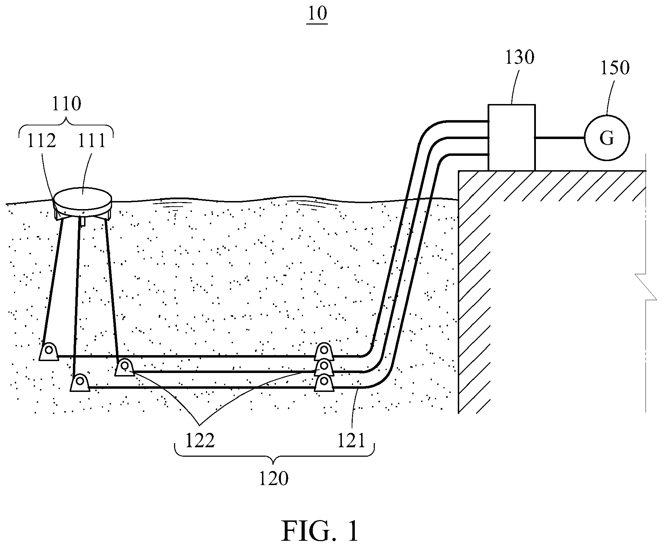

Hereinafter, a wave force generation system 10 according to example embodiments is described with reference to FIG. 1. FIG. 1 is a diagram illustrating a concept of the wave force generation system 10 according to an example embodiment.

Referring to FIG. 1, the wave force generation system 10 is configured to include a movable object 110, a motion transmission portion 120, a power conversion portion 130, and a power production portion 150.

The movable object 110 moves in six degrees-of-freedom based on movement of waves while floating on the waves. Specifically, the movable object 110 may perform a total of six degrees-of-freedom motions by performing translational motions such as heave, surge, and sway, or rotational motions such as yaw, pitch, and roll, along an x-axis, a y-axis and a z-axis based on movement of waves.

For example, the movable object 110 may be formed to move based on movement of waves while floating on waves, and may be a float or a buoy. The movable object 110 may be configured to include a body 111 formed to float on waves, and a coupling portion 112 to which the motion transmission portion 120 is coupled.

The body 111 of the movable object 110 may be formed with various shapes. The body 111 may be, for example, disc-shaped or tubular shaped, and may have various shapes, for example, a cylinder, a polygonal column, a dome shape, or a disc shape. The body 111 may have various shapes by each form, shape, material, function, characteristic, effect, and a coupling relationship, and may be configured with various shapes. Also, a material of the body 111 may include all materials capable of floating on waves, but is not particularly limited thereto.

The coupling portion 112 may be formed to couple the body 111 to the motion transmission portion 120, and may have, for example, a shape of a ball joint with a motion angle of 360 degrees. The coupling portion 112 may be coupled so that the movable object 110 may freely move within a predetermined range in multiple directions based on movement of waves, and may be coupled to at least three different portions of the body 111 to transmit a six-degrees-of-freedom motion of the movable object 110. However, this is merely an example, and the coupling portion 112 may be coupled in various schemes that allow the motion transmission portion 120 to be coupled to the movable object 110 so that the movable object 110 may freely move within a limited range. Also, a position of the coupling portion 112 is not limited by the drawings, and may change to a position that may allow the movable object 110 to freely move within a predetermined range while preventing the movable object 110 from deviating from the predetermined range among various positions of the body 111.

Also, the coupling portion 112 may have a shape of a partition vertically formed under the body 111. The coupling portion 112 may be formed perpendicular to a horizontal surface so that the movable object 110 may more actively move in conjunction with movement of waves, and accordingly the movable object 110 may more efficiently move by movement of waves when a wave force is vertically exerted on the coupling portion 112. However, this is merely an example, and the coupling portion 112 may be configured so that the movable object 110 may receive forces of waves in all directions and energy or movement of waves may be efficiently transmitted to movement of the movable object 110.

The motion transmission portion 120 includes a tensile force transmission member 121 that is coupled to the movable object 110 and configured to transmit movement of the movable object 110, and a fixing member 122 configured to fix the tensile force transmission member 121 to the sea floor.

The tensile force transmission member 121 may convert multi-directional movement of the movable object 110 by waves into a linear reciprocating motion, and may transmit the linear reciprocating motion to the power conversion portion 130. For example, the tensile force transmission member 121 may have a shape of a predetermined wire that has one end coupled to the movable object 110 and another end connected to the power conversion portion 130. Also, the tensile force transmission member 121 may be a wire, a rope, a chain, a sprocket, a belt, and the like. In addition, the tensile force transmission member 121 may include, for example, a variety of means capable of connecting the movable object 110 and the power conversion portion 130 and transferring movement.

The tensile force transmission member 121 may react to all movements of the movable object 110 in conjunction with the six degrees-of-freedom motion of the movable object 110, and thus the tensile force transmission member 121 may most efficiently transmit a motion of the movable object 110 to the power conversion portion 130. In other words, tensile force transmission members 121 may be configured so that one tensile force transmission member 121 corresponding to a portion of the movable object 110 to which a force is applied in one direction may be pulled and so that another tensile force transmission member 121 connected to another portion of the movable object 110 may be loosened and may be pulled in reverse due to a tensile force of the one tensile force transmission member 121, while the movable object 110 is floating on a surface of the sea by a multi-directional force. Also, by movement of the movable object 110 in response to forces of waves continuing to be exerted on the movable object 110 in multiple directions, the tensile force transmission member 121 may perform a reciprocating motion. In other words, the tensile force transmission member 121 may change a motion of the movable object 110 to a linear reciprocating motion and may transmit the linear reciprocating motion to the power conversion portion 130. Also, the tensile force transmission member 121 may be connected to the movable object 110 in at least three positions, and may function to transmit all kinetic energy of the movable object 110 by allowing the movable object 110 to freely move within a predetermined range while preventing the movable object 110 from deviating from the predetermined range.

The fixing member 122 may be installed in the sea floor or other places, and may function to fix the tensile force transmission member 121 and to change a direction of the tensile force transmission member 121. In other words, the tensile force transmission member 121 may move about the fixing member 122 as a central axis within a predetermined range. Also, the fixing member 122 may be disposed in at least one position or a plurality of positions in a longitudinal direction of the tensile force transmission member 121 to fix the tensile force transmission member 121, or may be disposed in a position for changing the direction of the tensile force transmission member 121, to change the direction. For example, the fixing member 122 may include a plurality of rollers or a pulley.

The power conversion portion 130 may generate a hydraulic pressure by a reciprocating motion of the tensile force transmission member 121 received from the motion transmission portion 120, and may transmit the hydraulic pressure to the power production portion 150.

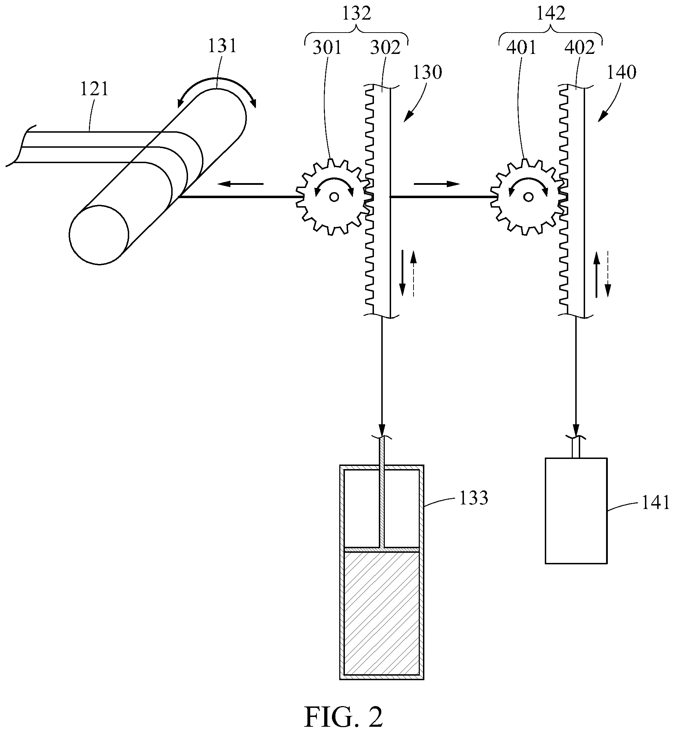

The power production portion 150 may produce electric energy by driving an electric generator using a hydraulic motor 134 of FIG. 2 of the power conversion portion 130.

In the present example embodiment, one movable object 110 may include a plurality of tensile force transmission members 121, and the plurality of tensile force transmission members 121 may be combined with one power conversion portion 130 and one power production portion 150. However, this is merely an example, and the power conversion portion 130 may be connected to each of the plurality of tensile force transmission members 121, or a plurality of power conversion portions 130 may be connected to each of the tensile force transmission members 121. Also, a plurality of power conversion portions 130 may be connected to one power production portion 150, or plurality of power conversion portions 130 may be connected to a plurality of power production portions 150, respectively.

Here, in the above-described example embodiments, the wave force generation system 10 is illustrated as being installed onshore, however, this is merely an example. The wave force generation system 10 according to example embodiments may also be applicable to a system installed offshore.

Hereinafter, a configuration of the power conversion portion 130 according to an example embodiment is described in detail with reference to FIG. 2. FIG. 2 is a diagram illustrating a concept of the configuration of the power conversion portion 130 in the wave force generation system 10.

Referring to FIG. 2, the power conversion portion 130 may be configured to include a converting body 131, and a first driving portion 132 configured to drive a hydraulic cylinder 133 in one direction by the tensile force transmission member 121. Also, a restoring force transmission portion 140 configured to drive the hydraulic cylinder 133 in an opposite direction by the tensile force transmission member 121 may be provided.

The converting body 131 may be disposed between the motion transmission portion 120 and the power conversion portion 130, and may convert movement of the tensile force transmission member 121 into a rotational motion or a reciprocating rectilinear motion. For example, the tensile force transmission member 121 may be wound around or connected to the converting body 131, and the converting body 131 may include a rotating shaft or a drum that converts a reciprocating linear motion of the tensile force transmission member 121 into a rotational motion or an axial motion. However, this is merely an example, and a variety of means capable of converting movement of the tensile force transmission member 121 into a reciprocating rotational motion or a reciprocating rectilinear motion may be substantially used.

The hydraulic cylinder 133 may generate a hydraulic pressure by kinetic energy received from the tensile force transmission member 121. In the drawings, the hydraulic cylinder 133 is briefly illustrated, and description of a detailed configuration of the hydraulic cylinder 133 is omitted.

The first driving portion 132 may be disposed to drive the hydraulic cylinder 133 by movement of the tensile force transmission member 121. For example, the first driving portion 132 may include a rack gear 302 and a pinion gear 301. However, this is merely an example, and the first driving portion 132 may have various configurations capable of pressurizing the hydraulic cylinder 133.

The restoring force transmission portion 140 may be connected to the first driving portion 132 by the same tensile force transmission member 121, and may be provided to apply a force in a direction opposite to a direction in which a force is applied to the first driving portion 132 by the tensile force transmission member 121. Here, when a tensile force is applied to the tensile force transmission member 121 based on movement of the movable object 110, a force may be applied to the first driving portion 132 and the hydraulic cylinder 133 in one direction. However, since the tensile force transmission member 121 has a shape of a wire, and the like, when the tensile force applied to the tensile force transmission member 121 is released, the force may not be applied to the first driving portion 132 and the hydraulic cylinder 133. Thus, in the present example embodiment, when the tensile force applied to the tensile force transmission member 121 is released, the restoring force transmission portion 140 may apply a force to the first driving portion 132 and the hydraulic cylinder 133 by applying a force in a direction opposite to the tensile force transmission member 121.

The restoring force transmission portion 140 may be configured to include an elastic portion 141, and a second driving portion 142 configured to drive the elastic portion 141. For example, the elastic portion 141 may include a gas spring, a hydraulic spring, or a pneumatic spring, and the second driving portion 142 may include a rack gear 402 and a pinion gear 401 similarly to the first driving portion 132.

However, the second driving portion 142 and the first driving portion 132 may be provided on the same tensile force transmission member 121, and may be configured to apply a force to the first driving portion 132 in a direction opposite to the tensile force transmission member 121. For example, when a tensile force is applied to the tensile force transmission member 121, the first driving portion 132 may move in one direction to apply a force to the hydraulic cylinder 133. In this example, the hydraulic cylinder 133 may be compressed or expanded. When the tensile force applied to the tensile force transmission member 121 is released, the second driving portion 142 and the elastic portion 141 may operate in a direction opposite to the first driving portion 132 to move the first driving portion 132 in another direction, so that a force may be applied to the hydraulic cylinder 133. For example, when a rod side of the hydraulic cylinder 133 is compressed by the tensile force transmission member 121, the hydraulic cylinder 133 may be compressed by the restoring force transmission portion 140. Of course, unlike the above-described example, it is possible to compress and expand the hydraulic cylinder 133 by the tensile force transmission member 121 and the restoring force transmission portion 140 as opposed to the above description.

Also, the restoring force transmission portion 140 may function to maintain a state of being stretched, by applying a tensile force of a predetermined magnitude to the tensile force transmission member 121.

Here, one power conversion portion 130 and one restoring force transmission portion 140 may be provided to connect all a plurality of tensile force transmission members 121, or a power conversion portion 130 and a restoring force transmission portion 140 may be provided in each of the plurality of tensile force transmission members 121, respectively.

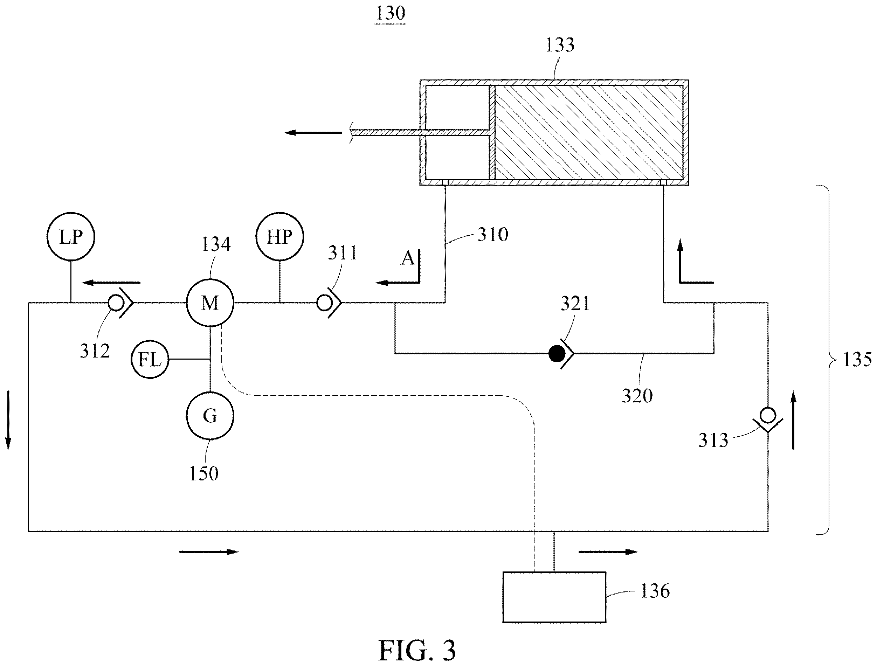

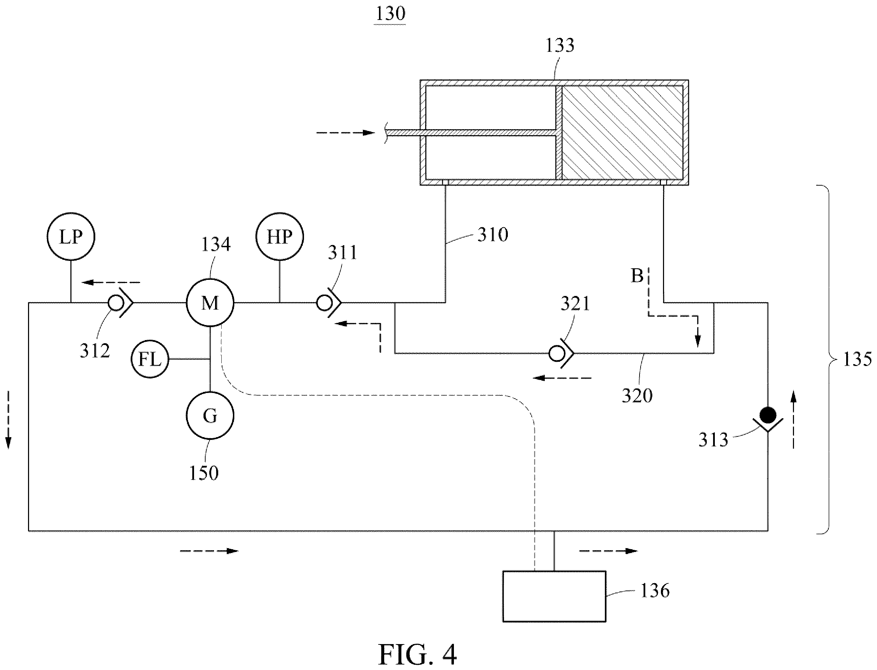

Next, the configuration of the power conversion portion 130 and a method of controlling the power conversion portion 130 will be described with reference to FIGS. 3 and 4. FIGS. 3 and 4 are drawings illustrating an operation of the power conversion portion 130 of FIG. 2.

The power conversion portion 130 may include a hydraulic circuit 135 that allows a fluid to flow by a hydraulic pressure generated by the hydraulic cylinder 133, and the hydraulic motor 134 that is disposed on the hydraulic circuit 135 to drive the power production portion 150.

When a tensile force is applied to the tensile force transmission member 121, a piston of the hydraulic cylinder 133 may be pulled while the first driving portion 132 of FIG. 2 is moving in one direction, and an internal fluid in the rod side of the hydraulic cylinder 133 may be compressed and may flow out from the hydraulic cylinder 133 in the one direction. When the tensile force applied to the tensile force transmission member 121 is released, the restoring force transmission portion 140 of FIG. 2 may allow the first driving portion 132 to move in another direction, and an internal fluid in a blind side of the hydraulic cylinder 133 may be compressed and may flow out from the hydraulic cylinder 133 in the other direction.

Here, in the present example embodiment, the internal fluid in the rod side of the hydraulic cylinder 133 may be compressed by the tensile force transmission member 121, and the internal fluid in the blind side of the hydraulic cylinder 133 may be compressed by the restoring force transmission portion 140, however, a reverse operation may also be possible.

The hydraulic motor 134 may be driven by the hydraulic pressure generated by the hydraulic cylinder 133, and may be connected to the power production portion 150 to generate electric energy in the power production portion 150 through rotational energy of the hydraulic motor 134.

The hydraulic circuit 135 may drive the hydraulic motor 134 by allowing a fluid to flow by the hydraulic pressure generated by the hydraulic cylinder 133. The hydraulic circuit 135 may include a first path 310 configured to allow a fluid to flow by a hydraulic pressure generated when a force is applied to the hydraulic cylinder 133 in one direction, and a second path 320 configured to allow a fluid to flow by a hydraulic pressure generated when a force is applied to the hydraulic cylinder 133 in another direction.

The hydraulic motor 134 may be disposed on the first path 310. When a fluid flows along the first path 310, the hydraulic motor 134 may be driven so that electric energy may be produced in the power production portion 150.

Also, a plurality of check valves 311, 312 and 313 may be disposed on the first path 310 to allow a fluid to flow in one direction. For example, one or more check valves, for example, the check valves 311 and 312, may be disposed on a portion in which the first path 310 is branched from the second path 320. Also, one or more check valves, for example, the check valves 311 and 312, may be disposed in front of and/or behind the hydraulic motor 134 on the first path 310. However, positions of the check valves 311, 312 and 313 and a number of check valves, for example, the check valves 311, 312 and 313, on the first path 310 are not limited by the drawing.

An end portion of the second path 320 may be connected to the first path 310 in a movement direction of a fluid of the second path 320 so that a fluid flowing in an opposite side to the hydraulic cylinder 133 may be bypassed with respect to the first path 310 to drive the hydraulic motor 134. Also, at least one check valve, for example, a check valve 321, configured to control a flow direction of a fluid may be disposed on the second path 320. Although one check valve 321 is disposed on the second path 320 in the drawing, this is merely an example, and a plurality of check valves 321 may be disposed.

In the drawings, reference numeral 136 indicates a tank 136 configured to store a fluid. The tank 136 may be disposed on the first path 310, and may be connected to the hydraulic motor 134 to store extra fluids.

Next, a method of controlling the power conversion portion 130 according to the example embodiment will be described.

First, referring to FIG. 3, kinetic energy of six degrees of freedom of the movable object 110 of FIG. 1 that moves by waves while floating on the waves may be transmitted to the power conversion portion 130 through the tensile force transmission member 121.

For example, when a tensile force is applied to the tensile force transmission member 121, a force may be applied to the hydraulic cylinder 133 in one direction by the first driving portion 132. In this example, the hydraulic cylinder 133 may be expanded or compressed by the first driving portion 132. When the tensile force applied to the tensile force transmission member 121 is released, it may be difficult to exert a force on the hydraulic cylinder 133 in the first driving portion 132, however, the restoring force transmission portion 140 of FIG. 2 may apply a force to the hydraulic cylinder 133 in a direction opposite to the first driving portion 132. In other words, the restoring force transmission portion 140 may compress or expand the hydraulic cylinder 133.

When the piston of the hydraulic cylinder 133 is pulled by the first driving portion 132, the internal fluid in the rod side of the hydraulic cylinder 133 may be compressed. A pressure in one direction of the hydraulic cylinder 133 may increase, and a pressure in another direction may decrease, and accordingly the fluid may flow out from the hydraulic cylinder 133 in the one direction. The fluid flowing out from the hydraulic cylinder 133 may flow along the first path 310 in a direction indicated by an arrow A. When the fluid flows along the first path 310, the hydraulic motor 134 may be driven so that electric energy may be produced in the power production portion 150 by the hydraulic motor 134. Here, a fluid may flow from the tank 136 into a low-pressure side formed in the blind side of the hydraulic cylinder 133 by the check valve 313 installed adjacent to the other direction of the hydraulic cylinder 133 on the first path 130.

Here, the check valve 321 on the second path 320 may be closed, and thus it is possible to prevent the fluid from flowing along the second path 320 by the check valve 321.

Referring to FIG. 4, when the internal fluid in the blind side of the hydraulic cylinder 133 is compressed by the restoring force transmission portion 140, a pressure in one direction of the hydraulic cylinder 133 may decrease, and a pressure in another direction of the hydraulic cylinder 133 may increase, so that the fluid may flow out from the hydraulic cylinder 133 in the other direction, in contrast to a state shown in FIG. 3. Also, the fluid flowing out from the hydraulic cylinder 133 may flow along the second path 320 in a direction indicated by an arrow B. Here, the check valve 313 installed adjacent to the other direction of the hydraulic cylinder 133 on the first path 310 may be closed, and thus it is possible to prevent the fluid from flowing from the hydraulic cylinder 133 to the tank 136.

Also, most of the fluid flowing along the second path 320 may flow from a portion that converges to the first path 310 to a low-pressure side formed in the rod side of the hydraulic cylinder 133, and the remaining fluid may flow through the first path 310 through the check valve 311. In addition, when the fluid flows through the first path 310, the hydraulic motor 134 may be driven to produce electric energy in the power production portion 150.

In the present example embodiment, the first driving portion 133 may move in one direction by movement of the tensile force transmission member 121 to expand (or compress) the hydraulic cylinder 133, and the first driving portion 133 may compress (or expand) the hydraulic cylinder 133 in a direction opposite to the tensile force transmission member 121 by the restoring force transmission portion 140, and thus the hydraulic cylinder 133 may generate hydraulic pressures in both directions by a reciprocating motion of the motion transmission portion 120 of FIG. 1. Also, by the hydraulic pressures generated by the hydraulic cylinder 133, the hydraulic motor 134 may continue to be driven, and the power production portion 150 may produce electric energy. In addition, a fluid may flow through the first path 310 during both compression and expansion of the hydraulic cylinder 133, and thus the power production portion 150 may continue to produce electric energy, so that electric energy may be constantly produced.

While this disclosure includes specific example embodiments, it will be apparent to one of ordinary skill in the art that various changes in form and details may be made in these example embodiments without departing from the scope of the claims. The example embodiments described herein are to be considered in a descriptive sense only, and not for purposes of limitation. Descriptions of features or aspects in each example embodiment are to be considered as being applicable to similar features or aspects in other example embodiments. Suitable results may be achieved if the described techniques are performed in a different order, and/or if components in a described system, architecture, device, or circuit are combined in a different manner, and/or replaced or supplemented by other components or their equivalents.

Therefore, the scope of the invention is defined not by the detailed description, but by the claims.

## Claims

1. A wave force generation system comprising:
a power conversion portion (130) comprising a hydraulic cylinder (133) configured to generate a hydraulic pressure by a six degrees-of-freedom motion of a movable object (110) floating on waves,
wherein when a force is applied to the hydraulic cylinder (133) in one direction thereof, the power conversion portion (130) allows a fluid to flow along a first path, to produce electric energy, and
wherein when a force is applied to the hydraulic cylinder (133) in another direction thereof, the power conversion portion (130) allows the fluid to flow through a second path that allows the fluid to bypass and flow in a direction opposite to the first path, and the second path is merged with the first path, to produce electric energy,
whereby the system further comprises a motion transmission portion (120) and the motion transmission portion includes a plurality of tensile force transmission members (121) connected to at least three portions of the movable object (110),
**characterized in that** each of the tensile force transmission members (121) comprises a first driving portion (132) configured to drive the hydraulic cylinder (133), and a restoring force transmission portion (140),
wherein when a tensile force is applied to the tensile force transmission members (121), a force is applied to the first driving portion (132) and to the hydraulic cylinder (133) in the one direction, and when the tensile force is released in each of the tensile force transmission members (121), the restoring force transmission portion (140) applies a force to the hydraulic cylinder (133) in the other direction,
wherein the first driving portion (132) converts movement of each of the tensile force transmission members (121) into a reciprocating rectilinear motion and transmits a force to the hydraulic cylinder (133).

2. The wave force generation system of claim 1, wherein the first driving portion (132) comprises a rack gear (302) and a pinion gear (301).

3. The wave force generation system of claim 1, wherein the restoring force transmission portion (140) comprises a second driving portion (142) connected to each of the tensile force transmission members (121) and an elastic portion (141) driven by the second driving portion, and the elastic portion comprises at least one of a gas spring, a hydraulic spring, and a pneumatic spring.

4. The wave force generation system according to claim 3, wherein the second driving portion (142) comprises a rack gear (402) and a pinion gear (401)

5. The wave force generation system of claim 1, wherein the motion transmission portion (120) further includes fixing members (122) configured to fix the tensile force transmission members (121) to the sea floor.

6. The wave force generation system of claim 5, E,r wherein each tensile force transmission member (121) moves about the corresponding fixing member (122) as a central axis within a predetermined range.

7. A method of controlling a wave force generation system (10) according to any of the preceding claims, the method comprising:
transmitting six degrees-of-freedom kinetic energy of the movable object (110) that moves by waves while floating on the waves to the power conversion portion (130) through the tensile force transmission members (121);
generating a hydraulic pressure in one direction when a tensile force is applied to the tensile force transmission members (121), and generating a hydraulic pressure in another direction when the tensile force is released in the tensile force transmission members (121), in the power conversion portion (130); and
producing electric energy by each of the hydraulic pressure generated in the one direction and the hydraulic pressure generated in the other direction.

## Patentansprüche

1. Wellenkrafterzeugungssystem umfassend:
einen Energieumwandlungsteil (130), der einen Hydraulikzylinder (133) umfasst, der so konfiguriert ist, dass er einen hydraulischen Druck durch eine Bewegung mit sechs Freiheitsgraden eines beweglichen Objekts (110), das auf Wellen schwimmt, erzeugt,
wobei, wenn eine Kraft auf den Hydraulikzylinder (133) in einer Richtung desselben ausgeübt wird, der Energieumwandlungsteil (130) es einer Flüssigkeit ermöglicht, entlang eines ersten Weges zu fließen, um elektrische Energie zu erzeugen, und
wobei, wenn eine Kraft auf den Hydraulikzylinder (133) in einer anderen Richtung desselben ausgeübt wird, der Energieumwandlungsteil (130) es der Flüssigkeit ermöglicht, durch einen zweiten Weg zu fließen, der es der Flüssigkeit ermöglicht, diesen zu umgehen und in einer dem ersten Weg entgegengesetzten Richtung zu fließen, und der zweite Weg mit dem ersten Weg zusammenläuft, um elektrische Energie zu erzeugen,
wobei das System ferner einen Bewegungsübertragungsteil (120) umfasst, und der Bewegungsübertragungsteil eine Mehrzahl von Zugkraftübertragungselementen (121) enthält, die mit mindestens drei Teilen des beweglichen Objekts (110) verbunden sind,
**dadurch gekennzeichnet, dass** jedes der Zugkraftübertragungselemente (121) einen ersten Antriebsteil (132) umfasst, der so konfiguriert ist, dass er den Hydraulikzylinder (133) antreibt, und einen Rückstellkraftübertragungsteil (140),
wobei, wenn eine Zugkraft auf die Zugkraftübertragungselemente (121) ausgeübt wird, eine Kraft auf den ersten Antriebsteil (132) und auf den Hydraulikzylinder (133) in der einen Richtung ausgeübt wird, und wenn die Zugkraft in jedem der Zugkraftübertragungselemente (121) freigegeben wird, der Rückstellkraftübertragungsteils (140) eine Kraft auf den Hydraulikzylinder (133) in der anderen Richtung ausübt,
wobei der erste Antriebsteil (132) die Bewegung jedes der Zugkraftübertragungselemente (121) in eine sich hin- und hergehende geradlinige Bewegung umwandelt und eine Kraft auf den Hydraulikzylinder (133) überträgt.

2. Wellenkrafterzeugungssystem nach Anspruch 1, wobei der erste Antriebsteil (132) ein Zahnstangengetriebe (302) und ein Ritzelgetriebe (301) umfasst.

3. Wellenkrafterzeugungssystem nach Anspruch 1, wobei der Rückstellkraftübertragungsteil (140) einen zweiten Antriebsteil (142), der mit jedem der Zugkraftübertragungselemente (121) verbunden ist, und einen elastischen Teil (141) umfasst, der von dem zweiten Antriebsteil angetrieben wird, und der elastische Teil mindestens eine Gas-, eine Hydraulik- oder eine pneumatische Feder umfasst.

4. Wellenkrafterzeugungssystem nach Anspruch 3, wobei der zweite Antriebsteil (142) ein Zahnstangengetriebe (402) und ein Ritzelgetriebe (401) umfasst.

5. Wellenkrafterzeugungssystem nach Anspruch 1, wobei der Bewegungsübertragungsteil (120) ferner Befestigungselemente (122) umfasst, die so konfiguriert sind, dass sie die Zugkraftübertragungselemente (121) am Meeresboden befestigen.

6. Wellenkrafterzeugungssystem nach Anspruch 5, bei dem sich jedes Zugkraftübertragungselement (121) um das entsprechende Befestigungselement (122) als Mittelachse innerhalb eines vorbestimmten Bereiches bewegt.

7. Verfahren zur Steuerung eines Wellenkrafterzeugungssystems (10) nach einem der vorhergehenden Ansprüche, das Verfahren umfassend:
Übertragung von kinetischer Energie des mit sechs Freiheitsgraden beweglichen Objekts (110), das sich durch Wellen bewegt, während es auf den Wellen zu dem Energieumwandlungsteil (130) durch die Zugkraftübertragungselemente (121) schwimmt;
Erzeugung eines hydraulischen Drucks in einer Richtung, wenn eine Zugkraft auf die Zugkraftübertragungselemente (121) ausgeübt wird, und Erzeugung eines hydraulischen Drucks in einer anderen Richtung, wenn die Zugkraft in den Zugkraftübertragungselementen (121) in dem Energieumwandlungsteil (130) freigegeben wird; und
Erzeugung von elektrischer Energie durch den jeweiligen hydraulischen Druck, der in der einen Richtung erzeugt wird, und den hydraulischen Druck, der in der anderen Richtung erzeugt wird.

## Revendications

1. Système de production d'énergie à partir de la force des vagues comprenant :
une partie de conversion d'énergie (130) comprenant un vérin hydraulique (133) configuré pour générer une pression hydraulique par un mouvement à six degrés de liberté d'un objet mobile (110) flottant sur les vagues,
dans lequel lorsqu'une force est appliquée au vérin hydraulique (133) dans une direction de celle-ci, la partie de conversion d'énergie (130) permet à un fluide de s'écouler le long d'un premier chemin, pour produire de l'énergie électrique, et
dans lequel lorsqu'une force est appliquée au vérin hydraulique (133) dans une autre direction de celui-ci, la partie de conversion d'énergie (130) permet au fluide de s'écouler à travers un deuxième chemin qui permet au fluide de contourner et de s'écouler dans une direction opposée au premier chemin, et le deuxième chemin est fusionné avec le premier chemin, pour produire de l'énergie électrique,
le système comprenant en outre une partie de transmission de mouvement (120) et la partie de transmission de mouvement comprend une pluralité d'éléments de transmission de force de traction (121) connectés à au moins trois parties de l'objet mobile (110),
**caractérisé en ce que** chacun des éléments de transmission de force de traction (121) comprend une première partie d'entraînement (132) configurée pour entraîner le vérin hydraulique (133), et une partie de transmission de force de rappel (140),
dans lequel lorsqu'une force de traction est appliquée aux éléments de transmission de force de traction (121), une force est appliquée à la première partie d'entraînement (132) et au vérin hydraulique (133) dans une direction, et lorsque la force de traction est relâchée dans chacun des éléments de transmission de force de traction (121), la partie de transmission de force de rappel (140) applique une force au vérin hydraulique (133) dans l'autre sens,
la première partie d'entraînement (132) convertissant le mouvement de chacun des éléments de transmission de force de traction (121) dans un mouvement rectiligne alternatif et transmet une force au vérin hydraulique (133).

2. Système de production d'énergie à partir de la force des vagues selon la revendication 1, dans lequel la première partie d'entraînement (132) comprend un engrenage à crémaillère (302) et un pignon (301).

3. Système de production d'énergie à partir de la force des vagues selon la revendication 1, dans lequel la partie de transmission de force de rappel (140) comprend une seconde partie d'entraînement (142) reliée à chacun des éléments de transmission de force de traction (121).
et une partie élastique (141) entraînée par la seconde partie d'entraînement, et la partie élastique comprend au moins un parmi un ressort à gaz, un ressort hydraulique et/ou un ressort pneumatique.

4. Système de production d'énergie à partir de la force des vagues selon la revendication 3, dans lequel la deuxième partie d'entraînement (142) comprend un engrenage à crémaillère (402) et un pignon (401).

5. Système de production d'énergie à partir de la force des vagues selon la revendication 1, dans lequel la partie de transmission de mouvement (120) comprend en outre des éléments de fixation (122) configurés pour fixer les éléments de transmission de force de traction (121) au fond marin.

6. Système de production d'énergie à partir de la force des vagues selon la revendication 5, dans lequel chaque élément de transmission de force de traction (121) se déplace autour de l'élément de fixation correspondant (122) en tant qu'axe central dans une plage prédéterminée.

7. Procédé de command d'un système de production d'énergie à partir de la force des vagues (10) selon l'une quelconque des revendications précédentes, le procédé comprenant
la transmission de l'énergie cinétique à six degrés de liberté de l'objet mobile (110) qui se déplace avec les vagues tout en flottant sur les vagues à la partie de conversion d'énergie (130) à travers les éléments de transmission de force de traction (121) ;
générer une pression hydraulique dans une direction lorsqu'une force de traction est appliquée aux éléments de transmission de force de traction (121), et générer une pression hydraulique dans une autre direction lorsque la force de traction est relâchée dans les éléments de transmission de force de traction (121), dans la partie de conversion d'énergie (130) ; et
produire de l'énergie électrique par chacune parmi la pression hydraulique générée dans un sens et la pression hydraulique générée dans l'autre sens.
